# FASCICULE DE BREVET EUROPEEN

(11) **EP 1 111 347 B1**
(45) Date de publication et mention de la délivrance du brevet: **05.09.2001**
(21) Numéro de dépôt: 99811164.5
(22) Date de dépôt: 15.12.1999
(51) Int. Cl.: G01D 5/347

(54) **Capteur de position**
Positionsgeber
Positional encoder

(43) Date de publication de la demande: 27.06.2001
(73) Titulaire: Brown & Sharpe Tesa S.A., 1020 Renens (CH)
(72) Inventeur: Cardillo, Marco, 1007 Lausanne (CH); Duteil, Roland, 1203 Genève (CH)
(74) Mandataire: Saam, Christophe

(56) Documents cités:
- EP-A- 0 838 665
- US-A- 4 661 698
- US-A- 4 746 792
- US-A- 5 120 252
- US-A- 5 266 797
- PATENT ABSTRACTS OF JAPAN vol. 010, no. 147 (P-460), 29 mai 1986 (1986-05-29) -& JP 61 000712 A (TOUKIYOU SEIMITSU:KK), 6 janvier 1986 (1986-01-06)

## Description

La présente invention concerne un système optoélectronique pour un dispositif de mesure dimensionnel, en particulier un système optoélectronique pour un dispositif portable de mesure de déplacement linéaire et/ou de déplacement angulaire. La présente invention concerne en particulier un système optoélectronique pour un dispositif de mesure de déplacement de type comparateur.

Des systèmes optiques pour la mesure de dimensions et d'angles sont décrits notamment dans DE19505176 (Baumer Electric AG). Ils comprennent de manière générale un émetteur lumineux émettant un rayon lumineux envoyé au moyen d'une optique appropriée en direction d'un photodétecteur. Une règle ou un disque gradué est disposé dans le chemin optique entre l'émetteur et le photodétecteur. L'illumination du capteur est interrompue lorsqu'une graduation de la règle ou du disque se trouve dans le chemin optique. Un compteur compte le nombre d'interruptions du signal fourni par le capteur pour en déduire le déplacement de la règle ou du disque et afficher une valeur représentative de ce déplacement. De tels dispositifs sont utilisés notamment dans des appareils de mesure et de comparaison de dimensions de pièces mécaniques.

Un dispositif de ce type est décrit dans le brevet CH683798 (TESA SA), auquel le lecteur peut utilement se référer. Ce document décrit un système optoélectronique comprenant plusieurs photoémetteurs montés sur un circuit imprimé d'un côté d'une règle munie d'une double piste graduée et plusieurs photodétecteurs montés en regard sur un deuxième circuit de l'autre côté de la règle.

Ce dispositif présente l'inconvénient de nécessiter deux cartes de circuit imprimé, et donc un encombrement relativement important, en sorte qu'il est difficile de l'intégrer dans un dispositif portable. En outre, il est difficile d'aligner avec précision les composants optiques montés sur deux cartes différentes, notamment lorsque les deux circuits sont soumis à des variations de température et donc à des dilatations différentes.

La demande de brevet WO87/07944 (Renishaw) décrit un autre dispositif électroptique de mesure de dimension, dans lequel le faisceau lumineux émis par un photoémetteur est réfléchi en direction du photodétecteur par des surfaces réfléchissantes sur la règle. La construction décrite permet de placer le photoémetteur et le photodétecteur sur une même carte de circuit imprimé et d'utiliser une seule lentille. Toutefois, la portion du faisceau réfléchie étant faible, le contraste du signal reçu sur le photodétecteur est faible. En outre, la fabrication et l'alignement de la lentille unique sont soumises à des contraintes assez sévères afin que le faisceau optique soit focalisé sur la règle et réfléchi précisément en direction du photodétecteur au moyen d'une seule lentille.

L'abrégé de la demande JP61000712, publié dans les "Patent Abstracts of Japan", Vol. 010, n°147 (P-460), décrit un lecteur de règle optique comprenant une source lumineuse émettant un faisceau séparé par deux fibres optiques. Une optique discrète, comprenant plusieurs lentilles et surfaces réfléchissantes distinctes, renvoie ces faisceaux lumineux au travers d'une règle lue en transmission vers deux récepteurs lumineux. L'alignement des différents éléments optiques discrets est difficile à réaliser. L'émetteur est placé derrière la carte de circuit imprimé portant les deux photorécepteurs, augmentant l'épaisseur du dispositif.

Le brevet US-A-4661698 décrit un dispositif optique pour déterminer la position angulaire d'un axe rotatif. Le dispositif comprend une diode lumineuse et deux photorécepteurs fixes ainsi qu'un disque perforé tournant avec l'axe. Ce dispositif ne comprend pas d'éléments optiques et ne permet pas la mesure de dimension. La diode lumineuse et les photorécepteurs ne sont pas montées sur la même carte de circuit imprimé et nécessitent donc des précautions particulières pour leur alignement.

Un autre dispositif permettant de déterminer le nombre de tours effectués par un disque rotatif dans un compteur électrique est décrit dans le brevet US-A-5120252. L'alignement des photoémetteurs et des photodétecteurs est résolu en les plaçant dans les poches d'un boîtier moulé monté sur une carte PCB. Ce dispositif ne comprend pas d'éléments optiques et ne permet pas non plus la mesure de dimension.

Le brevet US-A-5266797 décrit un dispositif optoélectronique de mesure de dimension. Le système décrit ne peut toutefois fonctionner qu'avec une règle lue en réflexion, en sorte que le contraste du signal reçu sur les photodétecteurs est faible.

La demande de brevet EP-A1-0838665 décrit un dispositif optoélectronique de mesure de dimension comprenant un émetteur lumineux et un photodétecteur situés de part et d'autre d'une règle lue en transmission. Ce dispositif nécessite donc une épaisseur importante et des précautions particulières pour aligner le photodétecteur avec le photoémetteur.

US-A-4746792 décrit différents transducteurs optiques permettant de mesurer des déplacements et faisant appel à des optiques discrètes.

Un but de la présente invention est de proposer un système optoélectronique pour dispositif de mesure dimensionnel amélioré par rapport aux systèmes de l'art antérieur, notamment un système qui ne comporte pas les inconvénients mentionnés.

Un autre but est de proposer un système optoélectronique pour un dispositif de mesure dimensionnel de faible coût, de haute précision et d'encombrement réduits adapté par exemple à une utilisation dans un comparateur ou dans un autre dispositif de mesure dimensionnel portable ou de faible volume.

Un autre but est de proposer un système optoélectronique permettant de déterminer la position d'une règle ou d'un disque lu en transmission et comportant une succession de zones transparentes et opaques.

Selon l'invention, ces buts sont atteints au moyen d'un système optoélectronique muni des caractéristiques des revendications indépendantes, des variantes de réalisation préférentielles étant par ailleurs décrites dans les revendications dépendantes.

L'invention sera mieux comprise à l'aide de la description d'un exemple de réalisation illustré par les figures annexées qui montrent:

La figure 1, une vue en coupe d'un système optoélectronique selon une première variante de l'invention.

La figure 2, une vue en perspective d'un système optoélectronique selon la première variante l'invention.

La figure 3, une vue en coupe d'un système optoélectronique selon une deuxième variante de l'invention.

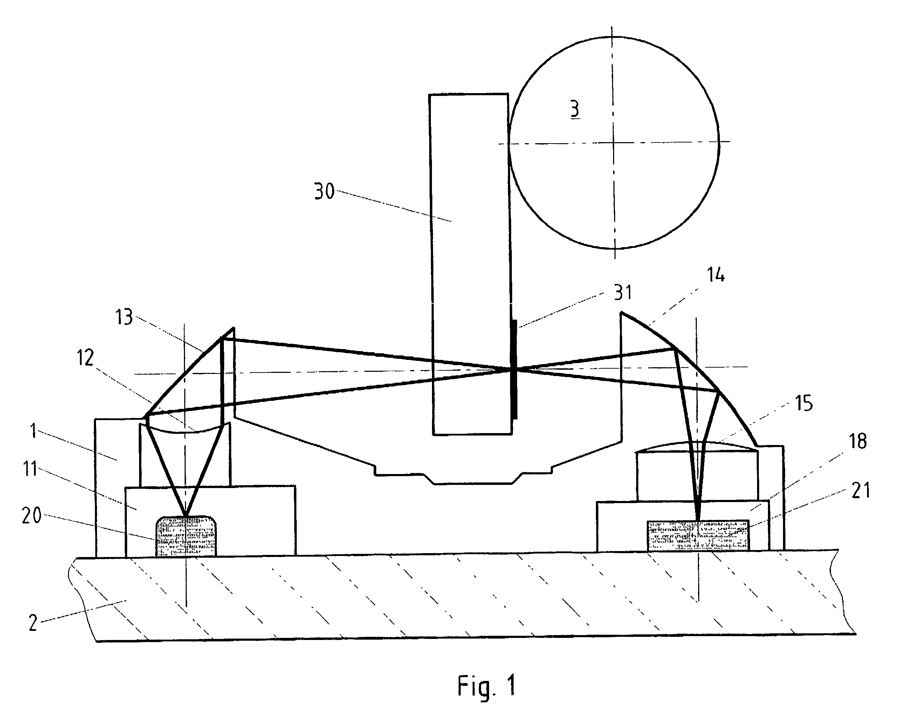

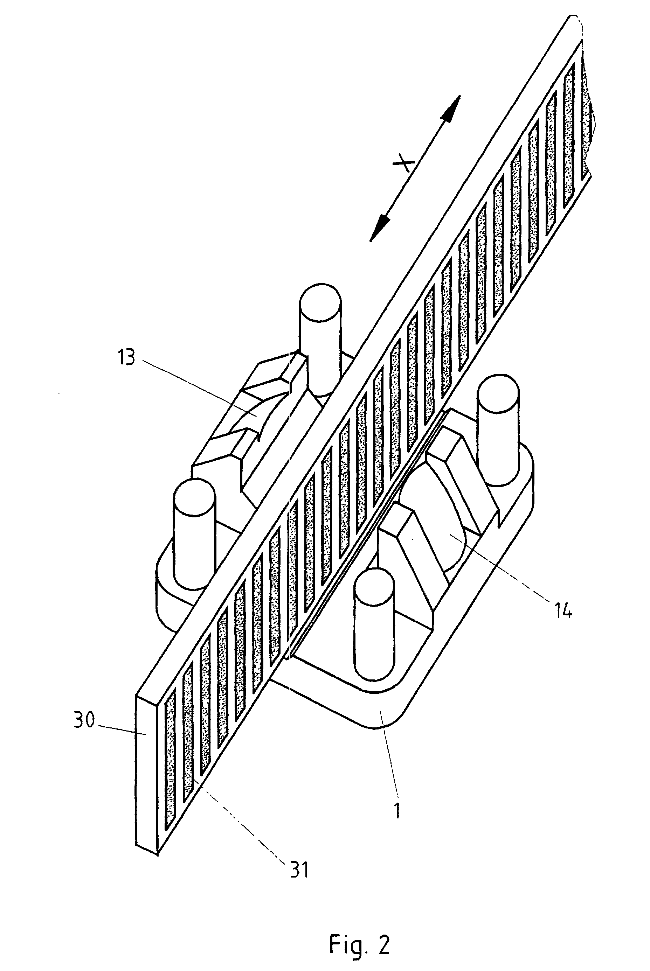

Un système optoélectronique selon l'invention, pouvant être utilisé par exemple dans un comparateur de dimension, est illustré sur les figures 1 et 2. Le système comprend une règle transparente 30 solidairement liée à un axe 3, par exemple à la touche de palpage du comparateur, pouvant être déplacée par translation selon la direction longitudinale x. Le système optoélectronique permet de fournir une valeur électrique représentative de la position et/ou de la vitesse de l'axe 3.

La règle 30 comprend au moins une portion munie de graduations 31 constituées de préférence par des zones chromées, sérigraphiées ou ayant subi un traitement de surface approprié afin de les rendre opaques. La règle comporte ainsi une alternance de zones opaques et transparentes. Différents motifs de graduations sur une ou plusieurs portions d'une règle transparente ont été suggérées, de façon à permettre un codage relatif ou de préférence absolu de la position de la règle. La présente invention n'est toutefois pas limitée à une disposition particulière des zones graduées sur la règle.

Le système optoélectronique comporte en outre un bloc optique intégré 1 monté sur une carte de circuit imprimé 2 sur laquelle se trouve de préférence également l'électronique de mesure et/ou d'affichage non représentée. Le bloc optique 1 est fixé sur la carte 2 par exemple par vissage et/ou collage.

Par bloc optique intégré, on entend dans le cadre de ce document un élément optique moulé et/ou usiné et comportant plusieurs faces optiques distinctes, par opposition à des systèmes optiques composés de plusieurs éléments individuels, par exemple de lentilles montées dans des cadres de lentilles. L'homme du métier comprendra que le bloc optique intégré peut aussi être composé de deux ou davantage d'éléments moulés séparément et fixés solidairement l'un à l'autre, par exemple collés mutuellement et/ou vissés sur la même carte de circuit 2.

La règle 30 est apte à être déplacée relativement au bloc optique 1. Dans une première variante de l'invention, la règle est mobile et le bloc optique est fixe. Dans une deuxième variante de l'invention, la règle est fixe tandis que le bloc optique est monté sur un élément apte à coulisser le long de la règle. D'autres variantes sont possibles dans lesquelles la règle et le bloc optique sont tous les deux mobiles. Par ailleurs, l'invention peut aussi être appliquée à des appareils dont la règle peut être déplacée relativement au bloc optique selon une trajectoire non rectiligne, par exemple circulaire.

Un photoémetteur 20, par exemple une diode lumineuse ou infrarouge, est monté sur la carte 2 et entièrement logé dans un évidement 11 sous la surface inférieure du bloc optique, de façon à émettre un faisceau lumineux en direction d'une première surface optique 12 du bloc optique. La première surface optique 12 est de préférence sphérique, et permet ainsi de collimater les rayons divergents émis par le photoémetteur 20 et de les orienter vers une seconde surface optique 13.

La seconde surface optique 13 est de préférence elliptique ou éventuellement sphérique (voir plane), et inclinée à 45° environ par rapport à l'axe optique du faisceau incident. Elle permet ainsi de renvoyer ce faisceau en le concentrant sur la portion graduée de la règle 30. La surface 13 est de préférence recouverte d'une métallisation afin de renvoyer le faisceau reçu.

Le faisceau lumineux ayant traversé la règle 30 atteint une troisième surface optique 14 du bloc optique 1, qui le concentre à nouveau en le renvoyant en direction de la carte 2. De la même façon que la deuxième surface optique 13, la troisième surface optique 14 est de préférence elliptique ou éventuellement sphérique (voir plane), et inclinée à 45° environ par rapport à l'axe optique du faisceau incident. Elle est de préférence recouverte d'une métallisation afin de renvoyer le faisceau reçu.

Dans une variante, au moins une des deux surfaces optiques parallèles à la règle (non numérotées) pourrait être cylindrique, au lieu de plane comme illustré sur la figure, afin de corriger l'astigmatisme. Il est aussi possible de prévoir des surfaces optiques de forme différente.

Le faisceau optique renvoyé par la surface 14 est focalisé par une quatrième surface optique 15 en direction d'un photodétecteur 21 monté sur la carte de circuit imprimé 2 et logé dans un évidement 18 sous la surface inférieure du bloc optique 2. La surface 15 est de préférence sphérique.

Le diamètre du point de focalisation de la lumière renvoyée par la surface optique 13 sur la règle 30 recouvre de préférence plusieurs graduations successives de la règle, la largeur des graduations pouvant éventuellement être variable. En mesure incrémentale, le faisceau lumineux doit comporter une structure périodique de même pas que la règle 30. Cette structure périodique peut par exemple être obtenue au moyen d'un réticule (grille) non représenté et placé à proximité immédiate de la règle. Dans une variante, on utilisera un photorécepteur constitué par une succession de petits photorécepteurs disposés de façon périodique, en sorte que les graduations 31 de la règle sont projetées sur les récepteurs avec la même périodicité. En mesure absolue, les nombres binaires codés figurant sur la règle sont lus avec des photorécepteurs multiples. La mesure incrémentale peut également être utilisée simultanément avec la mesure absolue.

Dans une variante préférentielle non illustrée, le photodétecteur 21 est monté par la technique connue sous la dénomination anglo-saxonne de "flip-chip" sur la face inférieure de la carte de circuit imprimé, dans lequel est ménagé un trou. Ce trou forme un puit laissant passer la lumière qui doit atteindre le photodétecteur, mais empêchant la lumière venant directement du photoémetteur de perturber le photodétecteur. Ce trou est de préférence rempli par un polymère transparent de protection.

Le ou chaque photodétecteur 21, par exemple un photorécepteur à infrarouge ou un détecteur à transfert de charge (CCD), produit un signal électrique proportionnel à l'intensité du faisceau lumineux ayant traversé les portions transparentes de la règle 30. Lorsque la règle se déplace longitudinalement selon l'axe x, chaque élément du photodétecteur produit ainsi une succession d'impulsions approximativement rectangulaires et correspondant aux graduations 31 traversées. Ces impulsions peuvent être comptées par un dispositif de comptage binaire non représenté fournissant en sortie un nombre binaire indiquant la position longitudinale de la règle.

L'homme du métier comprendra que le bloc optique 2 de l'invention peut également être adapté à des systèmes comportant deux ou plusieurs photodétecteurs (ou groupes de photodétecteurs) fournissant différents signaux qui permettent de déterminer le sens de déplacement de la règle 30 ou de déterminer sa position absolue, ainsi qu'éventuellement d'interpoler la position à l'intérieur d'un intervalle de graduation de règle. Dans ce cas, les différents photodétecteurs (ou groupes de photodétecteurs) 21 peuvent par exemple être logés dans un évidemment commun 18, ou chacun dans un évidemment individuel d'un même bloc optique 1. Dans une variante, il est aussi possible de prévoir plusieurs photoémetteurs 20 correspondant aux photodétecteurs (ou groupes de photodétecteurs) 21, situés dans un évidemment commun 11 d'un même bloc optique, ou éventuellement situés chacun dans un évidemment individuel d'un même bloc optique, voire dans un bloc optique distinct, les différents blocs optiques étant de préférence montés et alignés sur une même carte de circuit imprimé 2.

Par ailleurs, les deux portions du bloc optique planes en regard de la règle (entre la deuxième surface optique 13 et la troisième surface optique 14) constituent également des surfaces optiques et pourraient avoir des formes non planes, par exemple cylindriques ou sphériques.

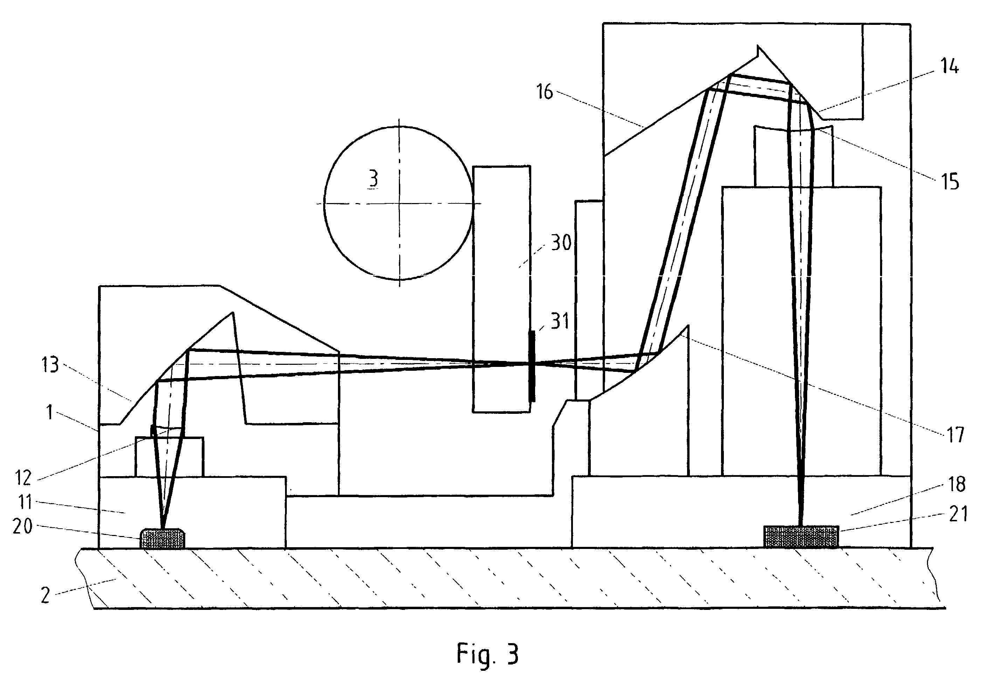

La figure 3 illustre de manière schématique une vue en coupe d'une seconde variante de bloc optique selon l'invention. Des éléments identiques ou correspondants dans les différentes variantes sont désignés par le même symbole de référence et ne seront pas décrits à nouveau, sauf lorsque leur mode de fonctionnement est différent.

Par rapport à la variante illustrée sur la figure 1, la première surface optique 12 est inclinée par rapport à l'axe optique, de façon à renvoyer des rayons optiques avec un angle très faible par rapport à la deuxième surface optique 13 elle-même également inclinée. L'angle d'incidence sur la deuxième surface optique 13 est suffisamment faible pour qu'il y ait réflexion totale sur cette surface qu'il n'est donc pas nécessaire de métalliser. La première surface optique 12 est de préférence sphérique de même que, dans cette variante, la deuxième surface 13.

Les rayons collimatés par la surface 13 sur la portion graduée de la règle 30 parviennent sur une cinquième surface optique 17 également sphérique, qui les renvoie également grâce à une réflexion totale sur la sixième surface optique de préférence plane. Le rayon lumineux est ensuite réfléchi sur la troisième surface optique 14, également plane et peu inclinée par rapport à l'axe optique, de manière à les renvoyer par une réflexion totale vers la quatrième surface optique 15, de forme sphérique, qui les focalise sur le photodétecteur 21.

Par rapport à la variante illustrée sur les figures 1 et 2, cette variante utilise six surfaces optiques planes ou sphériques, très simples à réaliser, au lieu de deux surfaces sphériques et deux surfaces elliptiques beaucoup plus coûteuses. En outre, les angles d'incidences du faisceau optique sur les quatre surfaces 13, 14, 16, 17 effectuant une réflexion sont suffisamment faibles, en sorte qu'il est possible de renoncer à métalliser ces surfaces et d'utiliser la réflexion totale.

Par ailleurs, on constatera que les deux surfaces optiques supplémentaires 16 et 17 sur la variante de la figure 3 font parcourir au faisceau lumineux une chicane l'éloignant momentanément de la carte de circuit imprimé. Il est possible ainsi de rallonger le chemin optique sans augmenter la distance entre le photoémetteur 20 et le photorécepteur 21, et donc sans augmenter l'encombrement du bloc optique. Il est aussi possible grâce à cette caractéristique d'utiliser des surfaces optiques à grande distance focale, permettant l'utilisation de surfaces sphériques plutôt qu'elliptiques. Enfin, cette caractéristique permet aussi de réduire sensiblement la distance entre le bord de la règle 30 et la carte de circuit imprimé 2, et donc de réduire encore l'encombrement général.

Dans une variante préférentielle de l'invention, on utilisera au moins une surface optique cylindrique afin de compenser l'astigmatisme provoqué par l'angle d'incidence du rayon lumineux sur les surfaces sphériques. On pourra ainsi utiliser par exemple une sixième surface de forme cylindrique.

L'homme du métier comprendra en outre que selon les contraintes de dimensionnement, de fabrication et de précision du système, certaines faces peuvent aussi, dans les premières et deuxièmes variantes, être cylindriques, paraboliques ou tout simplement planes au lieu de sphériques ou elliptiques.

L'homme du métier pourra par ailleurs imaginer d'autres constructions de blocs optiques permettant de disposer le ou les photoémetteurs et le ou les photodétecteurs sur un même plan ne coupant pas la règle. En particulier, des variantes de bloc optique dans lequel le parcours du faisceau lumineux passe plusieurs fois par le même point peuvent facilement être réalisées dans le cadre de cette invention.

Bien que, dans les deux variantes illustrées, la règle 30 se déplace dans un plan perpendiculaire au circuit imprimé 2, on constatera qu'il est aussi possible dans le cadre de cette invention d'utiliser une règle placée selon n'importe quel angle, par exemple parallèle, avec le circuit 2. La règle est dans tous les cas placée dans le chemin optique entre le photoémetteur 20 et le photodétecteur 21 assemblés du même côté de cette règle, de préférence sur la même carte de circuit imprimé.

Bien que la description ci-dessus se rapporte plus particulièrement au cas d'un dispositif de mesure de déplacement (position, vitesse, accélération, etc..), on comprendra que le système optoélectronique peut aussi être utilisé dans un système de mesure de déplacement angulaire. Dans ce cas, on utilisera au lieu de la règle linéaire 3 de préférence un disque comportant une plusieurs pistes graduées présentant une alternance de segments opaques et transparents et entraîné en rotation avec l'axe dont on souhaite déterminer la position ou la vitesse angulaire.

## Revendications

1. Système optoélectronique pour dispositif de mesure de dimension, comportant:
au moins un photoémetteur (20),
au moins un photodétecteur (21),
une règle transparente (30) comportant au moins une portion graduée munie d'une pluralité de graduations opaques (31),
un système optique (1) apte à concentrer le ou les faisceaux lumineux produits par ledit au moins un photoémetteur (20) sur ladite au moins une portion graduée, et à concentrer le ou les faisceaux lumineux ayant traversé complètement ladite règle (30) sur ledit au moins un photodétecteur (21), ladite règle transparente (30) étant apte à être déplacée relativement audit système optique (1),
la ligne droite joignant ledit photoémetteur audit photodétecteur ne traversant pas ladite règle,
**caractérisé en ce que** ledit système optique est constitué par un bloc optique intégré, et en ce que ledit photoémetteur, ledit photodétecteur et ledit bloc optique intégré sont montés sur la même carte de circuit imprimé.

2. Système optoélectronique selon la revendication précédente, **caractérisé en ce que** ladite règle (30) occupe un plan perpendiculaire à ladite carte de circuit imprimé (2).

3. Système optoélectronique selon Tune des revendications précédentes, **caractérisé en ce que** ledit bloc optique (1) comporte une première surface optique (12) pour collecter le faisceau lumineux émis par ledit photémetteur, une deuxième surface optique (13) pour renvoyer ce faisceau lumineux et le concentrer sur ladite portion de la règle (30), une troisième surface optique (14) pour concentrer et/ou renvoyer le faisceau lumineux ayant traversé ladite règle, et une quatrième surface optique (15) pour focaliser ledit faisceau sur ledit photodétecteur.

4. Système optoélectronique selon la revendication précédente, **caractérisé en ce que** ladite deuxième (13) et ladite troisième (14) surface sont disposées en regard de chaque côté de ladite règle (30).

5. Système optoélectronique selon l'une des revendications 3 ou 4, **caractérisé en ce que** lesdites premières (12) et quatrièmes (15) surfaces sont sphériques.

6. Système optoélectronique selon l'une des revendications 3 à 5, **caractérisé en ce que** au moins l'une desdites deuxièmes (13) et troisièmes (14) surfaces est elliptique.

7. Système optoélectronique selon l'une des revendications 3 à 5, **caractérisé en ce qu**'il comporte au moins une surface optique cylindrique.

8. Système optoélectronique selon l'une des revendications 3 à 7, **caractérisé en ce que** au moins l'une desdites deuxièmes (13) et troisièmes (14) surfaces est métallisée.

9. Système optoélectronique selon la revendication précédente, **caractérisé en ce que** au moins l'une desdites deuxièmes (13) et troisièmes (14) surfaces est inclinée à environ 45° par rapport à l'axe optique du faisceau incident.

10. Système optoélectronique selon la revendication 3, **caractérisé en ce que** ledit bloc optique (1) comporte une cinquième surface optique (17) et une sixième surface optique (16) entre ladite règle (30) et ladite troisième surface (14), lesdites cinquièmes et sixièmes surfaces collimatant ledit faisceau optique.

11. Système optoélectronique selon la revendication précédente, **caractérisé en ce que** ladite deuxième (13) et ladite troisième (14) surface sont disposées en regard de chaque côté de ladite règle (30).

12. Système optoélectronique selon l'une des revendications 10 à 11, **caractérisé en ce qu**'il comporte au moins une surface optique cylindrique.

13. Système optoélectronique selon l'une des revendications 10 à 12, **caractérisé en ce que** au moins l'une desdites deuxièmes et troisièmes surfaces optiques (12, 13, 14, 15, 16, 17) est sphérique.

14. Système optoélectronique selon la revendication précédente, **caractérisé en ce que** lesdites deuxièmes (13) et troisièmes (14) surfaces sont suffisamment inclinées par rapport à l'axe optique pour qu'une réflexion totale se produise sur lesdites cleuxièmes et troisièmes surfaces.

15. Système optoélectronique selon l'une des revendications 10 à 14, **caractérisé en ce que** ladite sixième surface optique (16) est plus éloignée de ladite carte de circuit imprimé (2) que ladite portion graduée (31).

16. Système optoélectronique selon l'une des revendications précedentes, **caractérisé en ce que** ledit photodétecteur est monté selon la technique du "flip-chip" sur la face d'une carte de circuit imprimé opposée audit bloc optique, un trou dans ladite carte de circuit imprimé permettant le passage de la lumière à travers ladite carte tout en protégeant le récepteur de la lumière directe de l'émetteur.

17. Système optoélectronique selon la revendication précédente, **caractérisé en ce que** ledit trou est rempli par un produit transparent de protection.

18. Comparateur muni d'un système optoélectronique selon l'une des revendications précédentes.

## Claims

1. Opto-electronic system for measuring dimensions for comparing dimensions, comprising:
at least one photo-emitter (20),
at least one photo-detector (21),
a transparent rule (30) comprising at least one graduated portion provided with a plurality of opaque graduations (31),
an optical system (1) capable of concentrating the light beam or beams generated by said at least one photo-emitter (20) on said graduated portion, and of concentrating the light beam or beams having completely crossed said rule (30) on said at least one photo-detector (21), said transparent rule (30) being capable of being moved relative to said optical system (1),
wherein the straight line joining said photo-emitter and said photo-detector does not cross said rule,
**characterized in that** said optical system is constituted of an integrated optical bloc and in that said photo-emitter, said photo-detector and said integrated optical bloc are mounted on the same printed circuit board.

2. Opto-electronic system according to the preceding claim, **characterized in that** said rule (30) occupies a plane that is perpendicular to said printed circuit board (2).

3. Opto-electronic system according to one of the preceding claims, **characterized in that** said optical bloc (1) comprises a first optical surface (12) for collecting the light beam emitted by said photo-emitter, a second optical surface (13) for reflecting this light beam and concentrating it on said portion of the rule (30), a third optical surface (14) for concentrating and/or reflecting the light beam having crossed said rule, and a fourth optical surface (15) for focalizing said beam onto said photo-detector.

4. Opto-electronic system according to the preceding claim, **characterized in that** said second (13) and third (14) surface are placed opposite on each side of said rule.

5. Opto-electronic system according to one of the claims 3 or 4, **characterized in that** said first (12) and fourth (15) surfaces are spherical.

6. Opto-electronic system according to one of the claims 3 to 5, **characterized in that** at least one of said second (13) and third (14) surfaces is elliptical.

7. Opto-electronic system according to one of the claims 3 to 5, **characterized in that** it comprises at least one cylindrical optical surface.

8. Opto-electronic system according to one of the claims 3 to 7, **characterized in that** at least one of said second (13) and third (14) surfaces is metal-coated.

9. Opto-electronic system according to the preceding claim, **characterized in that** at least one of said second (13) and third (14) surfaces is inclined at about 45° relative to the optical axis of the incident beam.

10. Opto-electronic system according to claim 3, **characterized in that** said optical bloc (1) comprises a fifth optical surface (17) and a sixth optical surface (16) between said rule (30) and said third surface (14), said fifth and sixth surfaces collimating said optical beam.

11. Opto-electronic system according to the preceding claim, **characterized in that** said second (13) and said third (14) surface are placed opposite on each side of said rule (30).

12. Opto-electronic system according to one of the claims 10 to 11, **characterized in that** it comprises at least one cylindrical optical surface.

13. Opto-electronic system according to one of the claims 10 to 12, **characterized in that** at least one of said second and third optical surfaces (12, 13, 14, 15, 16, 17) is spherical.

14. Opto-electronic system according to the preceding claim, **characterized in that** said second (13) and third (14) surfaces are sufficiently inclined relative to the optical axis so as to ensure a total reflection on said second and third surfaces.

15. Opto-electronic system according to one of the claims 10 to 12, **characterized in that** said sixth optical surface (16) is further removed from said printed circuit board (2) than said graduated portion (31).

16. Opto-electronic system according to one of the preceding claims, **characterized in that** said photo-detector is mounted according to the "flip-chip" technique on the side of a printed circuit board opposite said optical bloc, a hole in said printed circuit board allowing for the light to cross said board whilst protecting the receptor/detector from the direct light of the emitter.

17. Opto-electronic system according to the preceding claim, **characterized in that** said hole is filled by a protective transparent material.

18. Comparator provided with an opto-electronic system according to one of the preceding claims.

## Patentansprüche

1. Optoelektronisches System für Dimensionsmessvorrichtung, beinhaltend:
mindestens einen Photosender (20),
mindestens einen Photoempfänger (21),
ein durchsichtiges Lineal (30), welches mit mindestens einem graduierten Teil, bestehend aus einer Mehrheit von undurchsichtigen Einteilungen (31), ausgestattet ist,
ein optisches System (1), das den oder die Lichtstrahl(en), welche von besagtem mindestens einem Photosender (20) generiert werden, auf besagtem mindestens einem graduierten Teil konzentrieren kann, und das den oder die Lichtstrahl(en), welche vollständig durch besagtes Lineal (30) durchgedrungen sind, auf besagtem mindestens einem Photoempfänger (21) konzentrieren kann, wobei besagtes durchsichtiges Lineal (30) in Bezug auf besagtes optisches System (1) bewegt werden kann,
wobei die Gerade, welche besagten Photosender mit besagtem Photoempfänger verbindet, besagtes Lineal nicht durchdringt,
**dadurch gekennzeichnet**, dass besagtes optisches System aus einem integrierten optischen Block besteht, und dass besagter Photosender, besagter Photoempfänger und besagter integrierter optischer Block auf dem gleichen gedruckten Schaltkreis angebracht sind.

2. Optoelektronisches System gemäss dem vorhergehenden Anspruch, **dadurch gekennzeichnet**, dass besagtes Lineal (30) sich in einer zum gedruckten Schaltkreis (2) senkrechten Ebene befindet.

3. Optoelektronisches System gemäss einem der vorhergehenden Ansprüche, **dadurch gekennzeichnet**, dass besagter optischer Block (1) eine erste optische Oberfläche (12) beinhaltet, um den von besagtem Photosender emittierten Lichtstrahl aufzufangen, eine zweite optische Oberfläche (13), um diesen Lichtstrahl zu reflektieren und auf besagtem Linealteil (30) zu konzentrieren, eine dritte optische Oberfläche (14), um den durch besagtes Lineal durchgedrungenen Lichtstrahl zu konzentrieren und/oder zu reflektieren, sowie eine vierte optische Oberfläche (15), um besagten Lichtstrahl auf besagtem Photoempfänger zu fokussieren.

4. Optoelektronisches System gemäss dem vorhergehenden Anspruch, **dadurch gekennzeichnet**, dass besagte zweite (13) und dritte (14) Oberfläche gegenüber einander auf jeder Seite besagtes Lineals (30) angebracht werden.

5. Optoelektronisches System gemäss einem der Ansprüche 3 oder 4, **dadurch gekennzeichnet**, dass besagte erste (12) und vierte (15) Oberflächen sphärisch sind.

6. Optoelektronisches System gemäss einem der Ansprüche 3 bis 5, **dadurch gekennzeichnet**, dass mindestens eine der besagten zweiten (13) und dritten (14) Oberflächen elliptisch sind.

7. Optoelektronisches System gemäss einem der Ansprüche 3 bis 5, **dadurch gekennzeichnet**, dass es mindestens eine zylindrische optische Oberfläche enthält.

8. Optoelektronisches System gemäss einem der Ansprüche 3 bis 7, **dadurch gekennzeichnet**, dass mindestens eine der besagten zweiten (13) und dritten (14) Oberflächen metallisiert sind.

9. Optoelektronisches System gemäss dem vorhergehenden Anspruch, **dadurch gekennzeichnet**, dass mindestens eine der besagten zweiten (13) und dritten (14) Oberflächen um ca. 45° gegenüber der optischen Achse des einfallenden Strahls geneigt ist.

10. Optoelektronisches System gemäss Anspruch 3, **dadurch gekennzeichnet**, dass besagter optischer Block (1) eine fünfte (17) und eine sechste (16) optische Oberfläche zwischen besagtem Lineal (30) und besagter dritten Oberfläche (14) beinhaltet, wobei die besagten fünften und sechsten Oberflächen besagten optischen Strahl kollimatieren.

11. Optoelektronisches System gemäss dem vorhergehenden Anspruch, **dadurch gekennzeichnet**, dass besagte zweite (13) und besagte dritte (14) Oberfläche gegenüber einander auf jeder Seite besagtes Lineals (30) angebracht werden.

12. Optoelektronisches System gemäss einem der Ansprüche 10 bis 11, **dadurch gekennzeichnet**, dass es mindestens eine zylindrische optische Oberfläche enthält.

13. Optoelektronisches System gemäss einem der Ansprüche 10 bis 12, **dadurch gekennzeichnet**, dass mindestens eine der besagten zweiten und dritten optischen Oberflächen (12, 13, 14, 15, 16, 17) sphärisch ist.

14. Optoelektronisches System gemäss dem vorhergehenden Anspruch, **dadurch gekennzeichnet**, dass besagte zweite (13) und dritte (14) Oberflächen gegenüber der optischen Achse genügend geneigt sind, so dass eine vollständige Reflexion auf besagten zweiten und dritten Oberflächen entsteht.

15. Optoelektronisches System gemäss einem der Ansprüche 10 bis 14, **dadurch gekennzeichnet**, dass besagte sechste optische Oberfläche (16) weiter vom gedruckten Schaltkreis (2) liegt als besagter graduierter Teil (31).

16. Optoelektronisches System gemäss einem der vorhergehenden Ansprüche, **dadurch gekennzeichnet**, dass besagter Photoempfänger gemäss der "Flip-chip" Technik auf der Seite eines gedruckten Schaltkreises gegenüber besagtem optischen Block angebracht wird, wobei ein Loch in besagtem gedruckten Schaltkreis das Durchdringen des Lichts durch den besagten Schaltkreis erlaubt und gleichzeitig den Empfänger vom direkten Licht des Senders schützt.

17. Optoelektronisches System gemäss dem vorhergehenden Anspruch, **dadurch gekennzeichnet**, dass besagtes Loch mit einem durchsichtigen Schutzprodukt gefüllt ist.

18. Komparator, welcher mit einem optoelektronischen System gemäss einem der vorhergehenden Ansprüche ausgestattet ist.
